# EUROPÄISCHE PATENTSCHRIFT

(11) **EP 2 625 445 B1**
(45) Veröffentlichungstag und Bekanntmachung des Hinweises auf die Patenterteilung: **15.04.2015**
(21) Anmeldenummer: 11776687.3
(22) Anmeldetag: 13.08.2011
(51) Int. Cl.: F16J 9/20, B23P 15/06

(54) **VERFAHREN ZUR HERSTELLUNG EINES KOLBENRINGS**
METHOD FOR PRODUCING A PISTON RING
PROCÉDÉ DE PRODUCTION D'UN SEGMENT DE PISTON

(30) Priorität: 09.10.2010 DE 102010048079
(43) Veröffentlichungstag der Anmeldung: 14.08.2013
(73) Patentinhaber: Federal-Mogul Burscheid GmbH, 51399 Burscheid (DE)
(72) Erfinder: ESSER, Johannes, 51519 Odenthal (DE); KRÖSCHEL, Hans-Gerd, 51061 Köln (DE); HOPPE, Steffen, 51491 Overath (DE)
(74) Vertreter: Döpp, Ludger
(86) Internationale Anmeldenummer: PCT/DE2011/001604
(87) Internationale Veröffentlichungsnummer: WO 2012/045293

(56) Entgegenhaltungen:
- DE-A1- 19 752 720
- DE-C1- 10 002 282

## Beschreibung

Die Erfindung betrifft ein Verfahren zur Herstellung eines Kolbenrings mit einer axialen Höhe < 2 mm.

Zum allgemeinen Stand der Technik zählt es, beispielsweise galvanisch beschichtete, profilgeschliffene Schlauchfederringe mit und ohne Profil bis zu einer Ringhöhe von 2 mm laufflächenseitig bearbeiten zu können. Dabei werden üblicherweise beide Stegflanken symmetrisch und inklusive der Außennut bearbeitet.

Durch die DE 197 52 720 A1 ist ein Verfahren zur Herstellung eines Ölabstreifkolbenrings bekannt geworden, wobei auf der äußeren Umfangsfläche eine verschleißfeste Schicht aufgebracht und die Schicht zur Bildung scharfer Kanten an den Stegen geschliffen wird. Auf die äußere Umfangsfläche wird zunächst eine verschleißfeste galvanische Hartchromschicht mit einem durch die gesamte Schichtdicke sich erstreckenden Rissnetzwerk mit in den Rissen eingelagerten Feststoffpartikeln abgeschieden und darauf eine ausbruchsichere Deckschicht aufgebracht. Danach werden die scharfen Kanten an den Stegen fertig geschliffen, an denen lediglich die ausbruchsichere Deckschicht geschliffen wird.

Die DE 100 02 282 C1 offenbart ein Verfahren zur Herstellung eines Ölabstreifkolbenrings sowie einen nach diesem Verfahren hergestellten Ölabstreifkolbenring. Das Verfahren zur Herstellung des Ölabstreifkolbenrings, der mindestens einen mit einem verschleißfesten Überzug versehenen Laufsteg beinhaltet, wird ausgeführt, indem vor dem Aufbringen des verschleißfesten Überzugs laufstegseitig ein Profil erzeugt wird, das im konischen Bereich einer aus dieser Ebene radial hervorstehende Erhebung aufweist, dass zumindest dieses Profil mit dem verschleißfesten Überzug versehen wird und, dass zur Einstellung eines über den Ringumfang im wesentlichen gleichmäßigen Laufflächenprofils, zumindest im Bereich der radialen Erhebung, ein vorgebbarer Materialabtrag des Überzugs vorgenommen wird und anschließend die Laufstegflanken profilgeschliffen werden, so dass eine definierte zylindrische Restfläche im Bereich der radialen Erhebung erzeugt wird.

Diese Technik wird heute bei Kolbenringen, insbesondere Ölabstreifkolbenringen, bis zu einer Ringhöhe von 2 mm eingesetzt. Die ständig fortschreitende Entwicklung der Brennkraftmaschinen verlangt nun eine weitere Anpassung der Kolbenringhöhe in Bereiche bis zu 1,5 mm oder geringer. Nach heutigem Stand der Technik können derartige Ringe laufflächenseitig nicht mehr profilgeschliffen werden, weil die axial niedrigere Abmessung der Laufflächengestaltung über die verfügbare Technologie der Schleifscheibengestaltung nicht umgesetzt werden kann.

Der Erfindung liegt die Aufgabe zugrunde, unter Beibehaltung der bisher erfolgreich eingesetzten Laufflächengestaltungen an Kolbenringen, auch für Kolbenringe mit Abmessung < 2 mm eine Lösung aufzuzeigen, die es nicht nur erlaubt, die Laufflächen so zu bearbeiten, dass eine scharfe Abstreifkante gegeben ist, sondern darüber hinaus auch wirtschaftlich ist.

Diese Aufgabe wird gelöst durch ein Verfahren zur Herstellung eines Kolbenrings mit einer axialen Höhe < 2 mm, der eine mit mindestens einem Steg versehene radial äußere Lauffläche, eine radial innere Umfangsfläche sowie dazwischen verlaufende obere und untere Flankenflächen aufweist, indem der jeweilige Steg mit einer radial nach außen sich konisch verjüngenden Kontur versehen wird, danach die Lauffläche samt der Stegflanken des jeweiligen konischen Stegs mit mindestens einer verschleißfesten Schicht versehen und anschließend ausschließlich die, eine Abstreifkante bildende, Stegflanke des jeweiligen Stegs einem zumindest partiellen Materialabtrag unterzogen wird.

Vorteilhafte Weiterbildungen des Erfindungsgegenstandes sind den zugehörigen verfahrenstechnischen Unteransprüchen zu entnehmen.

Ebenfalls beansprucht wird ein Ölabstreifkolbenring, der nach dem erfindungsgemäßen Verfahren hergestellt ist.

Die nach dem erfindungsgemäßen Verfahren hergestellten Kolbenringe, insbesondere Ölabstreifkolbenringe, werden bevorzugt in Otto- und Dieselmotoren mit sehr hohem Formfüllvermögen und geringen Tangentialkräften eingesetzt.

Dadurch, dass nunmehr lediglich die dem Kurbelgehäuse zugewandte flankenseitige Verschleißschicht des jeweiligen Stegs partiell abgetragen wird, können die übrigen, nicht mit dem anderen Reibpartner in Wirkverbindung stehenden, Laufflächenbereiche des Kolbenrings unbearbeitet bleiben. Abweichend vom Stand der Technik gemäß DE 100 02 282 C1 findet somit keine symmetrische, vielmehr eine asymmetrische Bearbeitung des jeweiligen Laufstegs statt, wodurch die Zykluszeit beim Profilschleifen gegenüber dem Stand der Technik erheblich erhöht werden kann.

Von besonderem Vorteil ist, dass das Werkzeug, insbesondere eine Schleifscheibe, die jeweilige Stegflanke nur bis zu ca. 30 bis 90 % der Tiefe der jeweiligen Außennut bearbeiten muss, um eine scharfe Abstreifkante zu erzeugen.

Der Erfindungsgegenstand ist nicht nur auf Profile anwendbar, wie sie in der DE 100 02 282 C1 dargestellt sind. Vielmehr können auch Ölabstreifringe mit einer Bauhöhe < 2 mm, vorzugsweise ≤ 1,5 mm, bearbeitet werden, die eine zylindrische Stegfläche ohne weitere Profile aufweisen. Auch hier kann eine scharfe Abstreifkante durch das erfindungsgemäße Verfahren erzeugt werden, indem an der dem Ölraum zugewandten Stegflanke ein partieller Materialabtrag herbeigeführt wird.

Der Erfindungsgegenstand ist anhand eines Ausführungsbeispiels dargestellt und wird wie folgt beschrieben. Es zeigen:
- Figur 1: Teilansicht eines, eine Gesamthöhe von 1,5 mm aufweisenden Ölabstreifrings mit definiertem Laufflächenprofil;
- Figur 2: Darstellung des Kolbenrings gemäß Figur 1 mit einer Beschichtung auf der Lauffläche;
- Figur 3: Darstellung eines Bearbeitungswerkzeugs zum Bearbeiten eines definierten Flächenbereichs des Laufflächenstegs;
- Figur 4: Teilansicht eines Ölabstreifrings mit zylindrischem Laufflächenprofil;
- Figur 5: Darstellung eines Bearbeitungswerkzeugs zum Bearbeiten eines definierten Flächenbereichs des Laufflächenstegs;
- Figur 6: Darstellung eines mit einem Steg versehenen Ölabstreifrings samt angedeutetem Bearbeitungswerkzeug.

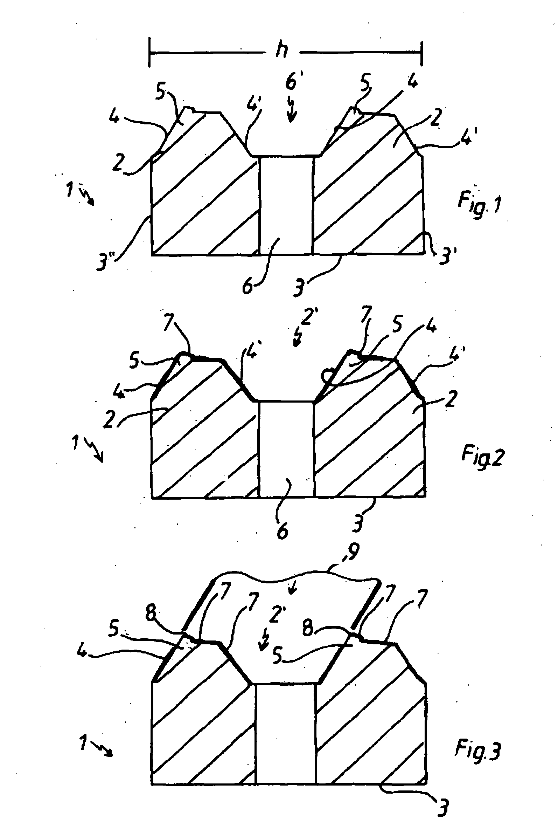

Der Erfindungsgegenstand beinhaltet unter anderem eine bildliche Darstellung der DE 100 02 282 C1. Wie bereits dargelegt, ist ein in den Figuren 1 bis 3 dieser Druckschrift dargestellter Ölabstreifring für Ringhöhen von ≥ 2 mm einsetzbar und die Lauffläche dieses Kolbenrings auch symmetrisch bearbeitbar. Für diese Anwendungsfälle gibt es noch Bearbeitungswerkzeuge, die die symmetrische Bearbeitung beider Laufstege gleichzeitig ermöglichen. Für Ringhöhen < 2 mm, insbesondere ≤ 1,5 mm, ist keine symmetrische Bearbeitung der Stege mehr möglich, da die Technik hinsichtlich der Schleifscheibengestaltung an ihre Grenzen stößt.

Figur 1 zeigt einen Kolbenringgrundkörper 1, der in diesem Beispiel eine Ringhöhe h von 1,5 mm aufweisen soll. Die Querschnittsform wurde analog zur DE 100 02 282 C1 gewählt, so dass auch hier gleichartige Bearbeitungskriterien zur Erzeugung des Grundprofils vorausgesetzt werden können. In einem ersten Arbeitsgang werden Laufstege 2 durch mechanische Bearbeitung dergestalt erzeugt, dass die Stegflanken 4,4' sich konisch verjüngen.

Ein jeder der Stege 2 wird so bearbeitet, dass eine radiale Erhebung 5 gebildet wird. Ebenfalls erkennbar sind die Ölablaufbohrungen 6, die sich vom Nutgrund der zwischen den Stegen 2 gebildeten Nut 6' in Richtung der inneren Umfangsfläche 3 verlaufen. Zwischen der Lauffläche 2' und der inneren Umfangsfläche 3 erstrecken sich die obere 3' und die untere Ringflanke 3".

Dieser so vorbereitete Kolbenringgrundkörper 1 wird, wie in Figur 2 dargestellt, im Bereich der gesamten Lauffläche 2', beinhaltend die Stege 2, die Erhebungen 5 sowie die Stegflanken 4,4', mit einer verschleißfesten Schicht 7 versehen, die lediglich die Ölablaufbohrungen 6 auslässt.

Zur Erzeugung einer scharfen Abstreifkante 8 im Übergangsbereich zwischen der jeweiligen Erhebung 5 und der zugehörigen Stegflanke 4 kommt ein in Figur 3 nur angedeutetes Schleifwerkzeug 9 zum Einsatz, das ausschließlich diesen Übergangsbereich bearbeitet und selbigen - wie dargestellt - vom verschleißfesten Material 7 befreit. Die übrigen Bereiche der Lauffläche 2' bleiben unbearbeitet. Der so bearbeitete Kolbenringgrundkörper 1 ergibt dann den fertigen Ölabstreifkolbenring, der bedarfsweise noch einem Läppvorgang unterzogen werden kann. Im Betriebszustand ist die jeweilige scharfe Abstreifkante 8 einem nicht dargestellten Kurbelgehäuse/Ölraum zugewandt.

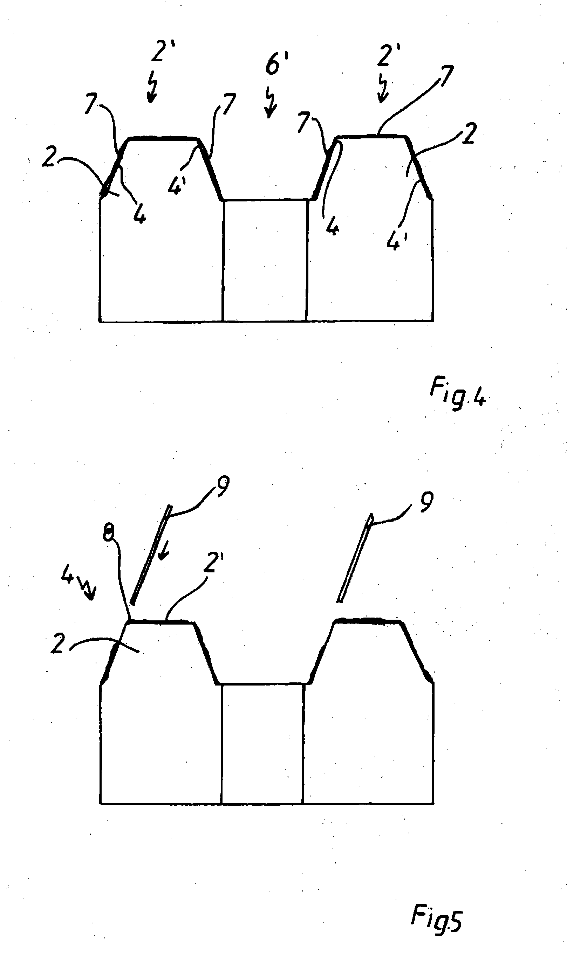

Die Figuren 4 bis 6 zeigen alternative Querschnittsformen von Ölabstreifkolbenringen. Gleiche Bezugszeichen werden soweit sinnvoll analog zu den Figuren 1 bis 3 verwendet.

Figur 4 entspricht vom Bearbeitungszustand her in etwa der Figur 2. Unterschiedlich zu den Figuren 1 bis 3 ist bei Figur 4, dass der jeweilige Steg 2 auf seiner einem nicht weiter dargestellten Reibpartner zugewandten Lauffläche 2' keine Profilierung aufweist, vielmehr zylindrisch bearbeitet wurde. Ansonsten entspricht die Querschnittsform derjenigen der Figuren 1 bis 3. Auf der jeweiligen Stegflanke 4,4' wurde ebenfalls ein verschleißfester Werkstoff 7 aufgebracht.

Figur 5 entspricht im Wesentlichen derjenigen der Figur 3. Das Bearbeitungswerkzeug 9 ist in Richtung der jeweiligen Stegflanke 4 zuführbar und trägt im Übergangsbereich von der zylindrischen Lauffläche 2' in die Stegflanke 4 über eine definierte radiale Höhe des Stegs 2 verschleißfestes Material ab. Durch diese Maßnahme wird im Übergangsbereich von der Lauffläche 2' in die Stegflanke 4 eine scharfe Abstreifkante 8 gebildet.

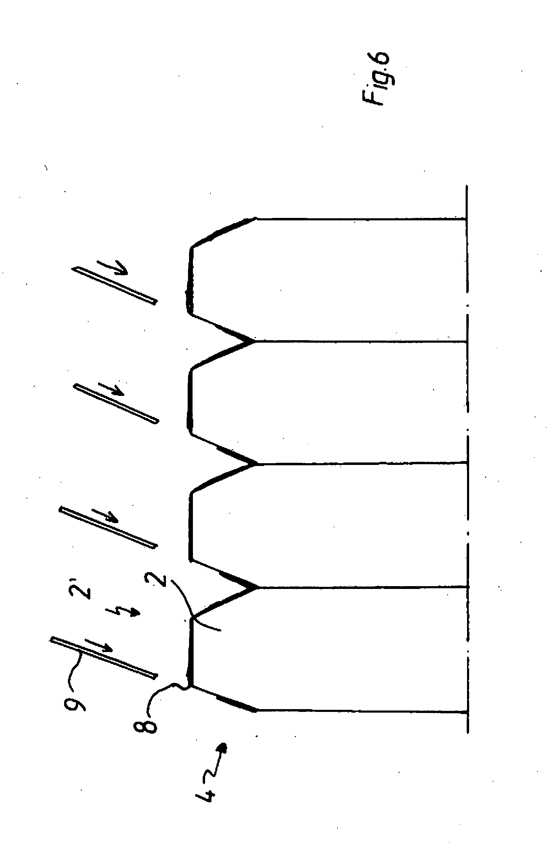

Figur 6 zeigt mehrere zu einem Paket zusammengestellte Ölabstreifkolbenringe, die lediglich einen einzelnen Laufflächensteg 2 aufweisen und im Übrigen eine Querschnittsform beinhalten, wie sie der Figur 4 zu entnehmen ist. Die Lauffläche 2' ist auch hier zylindrisch ausgeführt. In Analogie zu Figur 5 trägt das Bearbeitungswerkzeug 9 zur Bildung einer scharfen Abstreifkante 8 im Übergangsbereich von der Lauffläche 2' in die Stegflanke 4 über eine definierte radiale Höhe des Stegs 2 verschleißfestes Material ausschließlich von der Stegflanke 4 ab.

## Patentansprüche

1. Verfahren zur Herstellung eines Kolbenrings mit einer axialen Höhe < 2 mm, der eine mit mindestens einem Steg (2) versehene radial äußere Lauffläche (2'), eine radial innere Umfangsfläche (3) sowie dazwischen verlaufende obere und untere Flankenflächen (3', 3") aufweist, indem der jeweilige Steg (2) mit einer radial nach außen sich konisch verjüngenden Kontur versehen wird, danach die Lauffläche (2') samt der Stegflanken (4,4') des jeweiligen konischen Stegs (2) mit mindestens einer verschleißfesten Schicht (7) versehen und anschließend ausschließlich die, eine Abstreifkante (8) bildende, Stegflanke (4) des jeweiligen Stegs (2) einem zumindest partiellen Materialabtrag unterzogen wird.

2. Verfahren nach Anspruch, **dadurch gekennzeichnet**, däss ausschließlich die einem Kurbelgehäuse zugewandte flankenseitige Verschleißschicht (7) des jeweiligen Stegs (2) zumindest partiell abgetragen wird.

3. Verfahren nach Anspruch 1 oder 2, **dadurch gekennzeichnet, dass** die Lauffläche (2') im Anschluss an die Aufbringung der verschleißfesten Schicht (7) einem Rundläppvorgang unterzogen wird.

4. Verfahren nach einem der Ansprüche 1 bis 3, **dadurch gekennzeichnet, dass** von der jeweiligen Stegflanke (4) die verschleißfeste Schicht (7) über einen Flächenbereich zwischen 30 und 90 % der radialen Steghöhe durch ein Bearbeitungswerkzeug, insbesondere ein Schleifwerkzeug, abgetragen wird.

5. Verfahren nach einem der Ansprüche 1 bis 4, **dadurch gekennzeichnet, dass** die außerhalb der bearbeiteten jeweiligen Stegflanke (4) verbleibenden Flächenanteile der Lauffläche (2'), einschließlich des jeweiligen Stegs (2), keiner Bearbeitung unterzogen werden..

6. Ölabstreifkolbenring, hergestellt nach dem Verfahren gemäß einem der Ansprüche 1 bis 5.

## Claims

1. A method for the manufacturing of a piston ring having an axial height of < 2 mm and comprising a radial outer bearing surface (2') which is provided with at least one web (2), a radial inner circumferential surface (3) as well as upper and lower flank surfaces (3', 3") which extend between them, in that the respective web (2) is provided with a radially outwards conically tapering contour, afterwards the bearing surface (2') including the web flanks (4, 4') of the respective conical web (2) are provided with at least one wear-resistant layer (7) and afterwards exclusively the web flank (4) of the respective web (2) which forms a strip edge (8) is subjected to an at least partial material removal.

2. A method according to claim 1, **characterized in that** exclusively the wear-resistant layer (7) of the respective web (2), which is to be found on the flank side and faces a crankcase, will be at least partially removed.

3. A method according to claim 1 or 2, **characterized in that** the bearing surface (2') undergoes a cylindrical lapping operation after the wear-resistant layer (7) has been applied.

4. A method according to one of the claims 1 through 3, **characterized in that** the wear-resistant layer (7) is removed from the respective web flank (4) over a surface corresponding to 30 up to 90 % of the radial web height by means of a machining tool, especially a grinding tool.

5. A method according to one of the claims 1 through 4, **characterized in that** the surface portions of the bearing surface (2') which remain outside the treated respective web flank (4), including the respective web (2), will not undergo any treatment.

6. An oil scraper piston ring manufactured according to the method according to one of the claims 1 through 5.

## Revendications

1. Procédé de fabrication d'un segment de piston ayant une hauteur axiale de < 2 mm et comprenant une surface de glissement radiale extérieure (2') qui est munie d'au moins une entretoise (2), une surface circonférentielle radiale intérieure (3) ainsi que des surfaces de flanc supérieure et inférieure (3', 3") qui s'étendent entre celles-ci, en munissant l'entretoise respective (2) d'un contour qui s'effile de manière conique radialement vers l'extérieur, en munissant après la surface de glissement (2'), les flancs d'entretoise (4, 4') de l'entretoise conique respective (2) y compris, d'au moins un revêtement résistant à l'usure (7) et en soumettant après exclusivement le flanc d'entretoise (4) de l'entretoise respective (2), lequel forme un bord de raclage (8), à un enlèvement de matière au moins partiel.

2. Procédé selon la revendication 1, **caractérisé en ce qu'**on enlève, au moins partiellement, exclusivement la couche résistante à l'usure (7) de l'entretoise respective (2), laquelle se trouve du côté des flancs et fait face à un carter de moteur.

3. Procédé selon la revendication 1 ou la revendication 2, **caractérisé en ce qu'**on soumet la surface de glissement (2) à un processus de rodage cylindrique après l'application de la couche résistante à l'usure (7).

4. Procédé selon l'une des revendications 1 à 3, **caractérisé en ce qu'**on enlève la couche résistante à l'usure (7) du flanc d'entretoise respectif (4) sur une surface qui correspond à 30 jusqu'à 90 % de la hauteur radiale de l'entretoise par moyen d'un outil de traitement, notamment un outil abrasif.

5. Procédé selon l'une des revendications 1 à 4, **caractérisé en ce que** les parties de surface restantes de la surface de glissement (2'), l'entretoise respective (2) y compris, qui se trouvent à l'extérieur du flanc d'entretoise (4) respectif traité, ne sont pas soumises à un traitement.

6. Segment de piston racleur d'huile fabriqué selon le procédé selon l'une des revendications 1 à 5.
